Europäisches Patentamt

European Patent Office

Office européen des brevets

(19)

(11) Veröffentlichungsnummer : **0 508 957 A1**

(12) **EUROPÄISCHE PATENTANMELDUNG**

(21) Anmeldenummer : **92810260.7**

(22) Anmeldetag : **06.04.92**

(51) Int. Cl.⁵ : **B62J 1/02**, B62J 1/20

(30) Priorität : **10.04.91 CH 1070/91**

(43) Veröffentlichungstag der Anmeldung :
**14.10.92 Patentblatt 92/42**

(84) Benannte Vertragsstaaten :
**AT DE FR**

(71) Anmelder : **Hofstetter, Paul
Wülflingerstrasse 323
CH-8408 Winterthur (CH)**

(72) Erfinder : **Hofstetter, Paul
Wülflingerstrasse 323
CH-8408 Winterthur (CH)**

(74) Vertreter : **Breiter, Heinz
Patentanwalt H. Breiter AG
Schaffhauserstrasse 27 Postfach 1163
CH-8401 Winterthur (CH)**

(54) **Velosattel.**

(57)    Der Velosattel umfasst einen Tragrahmen (10) und ein Sitzteil mit längslaufenden, über den Tragrahmen (10) in Abstand gehaltenen, spannbaren Tragbändern (24) aus einem reissfesten Material.
   Zwei Tragbänder (24) erstrecken sich im wesentlichen V-förmig von einer vorderen Konturschale (16) zu einer ebenfalls vom Tragrahmen (10) abgestützten, anatomisch breiter geformten hinteren Konturschale (14). Die Tragbänder (24) umschlingen die Konturschalen (14, 16) zur Kraftaufnahme und sind mit diesen verbunden. Der im wesentlichen dreieckförmige Zwischenraum (34) der Tragbänder (24) bleibt auf der unteren Seite frei und ist der Luftzirkulation unter dem Sattel zugänglich. Auf der oberen Seite bleibt der Zwischenraum (34) ebenfalls frei oder ist höchstens mit einem feuchtigkeitsdurchlässigen Überzug bedeckt.

Fig. 1

EP 0 508 957 A1

Die Erfindung bezieht sich auf einen Velosattel aus einem Tragrahmen und einem Sitzteil mit längslaufenden, über den Tragrahmen in Abstand gehaltenen Tragbändern aus einem reissfesten Material.

Bei der Herstellung von Velosätteln ist immer darauf zu achten, dass diese einerseits bequem sind, jedoch andererseits zu keinen Sitzbeschwerden führen. Längere Ausfahrten, insbesondere mit grosser Kraftanstrengung und bei heissen Temperaturen, können wegen unvermeidlichen Schweissabsonderungen, verbunden mit Reibung, zu schmerzhaften Wundstellen führen, welche die Freude am Radfahren erheblich trüben. Auch Radrennfahrer sind von diesem Problem nicht verschont, bei Mehrtagerennen führen Sitzbeschwerden nicht selten zu einem vorzeitigen Ausscheiden.

Abhilfe ist auf zwei Wegen versucht worden:

– Spezielle Ausgestaltung des Schrittbereichs der Beinkleidung, z.B. durch weiche Ledereinlagen.

– Ausgeklügelte Ausgestaltung von Velosätteln durch komplizierte, aber auch teure Ausführungsformen, meist verbunden mit einer speziellen Polsterung.

Die CH, A, 15 548 aus dem letzten Jahrhundert beschreibt einen Velosattel mit einem oder mehreren parallel verlaufenden Lederriemen oder Bändern aus einem reissfesten Gewebe. Die Riemen oder Bänder können einzeln oder gemeinsam mit Spannvorrichtungen gespannt werden. Der beschriebene Velosattel hat ausser der Funktion nichts mit einem heute üblichen Velosattel zu tun. Er hat die Form eines zu Urzeiten des Zweirades üblichen Rundholzes.

Weiter ist aus der US, A, 4 429 915 ein Velosattel bekannt, welcher für lange Touren und den Rennbetrieb konzipiert ist. Das Sitzteil umfasst ein entlang der Aussenkonturen des Sattels umlaufendes Luftkissen, welches durch ein Schaumkissen im hinteren Sitzteil ergänzt ist. Unterhalb davon sind Y-förmige Tragbänder im Tragrahmen eingespannt, welche als Notbehelf bis zur Reparatur eines pneumatischen Defektes dienen sollen. Dieser Sattel ist derart kompliziert gestaltet, dass er für den Normalgebrauch auch aus wirtschaftlichen Gründen kaum für eine Serienfabrikation geeignet ist. Weiter unterscheidet er sich, abgesehen von den Sicherheitstragbändern, nicht von der Bauart üblicher Sättel und weist deren Nachteile auf.

Der Erfinder hat sich die Aufgabe gestellt, einen Velosattel der eingangs genannten Art zu schaffen, der einfach aufgebaut und daher kostengünstig ist, alle Anforderungen für eine anatomisch richtige Ausbildung erfüllt und durch Schweissabsonderung bedingte Sitzbeschwerden verhindert oder stark vermindert.

Die Aufgabe wird erfindungsgemäss dadurch gelöst, dass sich zwei Tragbänder im wesentlichen V-förmig von einer vorderen Konturschale zu einer ebenfalls vom Tragrahmen abgestützten, anatomisch breiter geformten hinteren Konturschale erstrecken, welche Tragbänder die Konturschalen zur Kraftaufnahme umschlingen und mit diesen verbunden sind, und der im wesentlichen dreieckförmige Zwischenraum der Tragbänder auf der unteren Seite freibleibend der Luftzirkulation unter dem Sattel zugänglich ist und auf der oberen Seite ebenfalls freibleibt oder höchstens mit einem feuchtigkeitsdurchlässigen Überzug bedeckt ist.Spezielle und weiterbildende Ausführungsformen der Erfindung sind Gegenstand von abhängigen Patentansprüchen.

Erfindungsgemäss können also die beiden Tragbänder unbedeckt bleiben und gleichzeitig die Sitzfläche des Velosattels bilden. Auch wenn die Tragbänder und der Zwischenraum in der Praxis aus ästhetischen Gründen meist mit einem feuchtigkeitsdurchlässigen, dünnen Überzug bedeckt sind, ändert dies nichts daran, dass die Schweissabsonderungen des Velofahrers stets ungehindert an die Luftzirkulation unter dem Sattel gelangen können. Damit bleibt auch die Haut des Velofahrers stets trocken, die Gefahr eines Wundreibens besteht nicht mehr oder ist stark vermindert, Sitzbeschwerden treten nicht oder kaum auf.

Nach der vorliegenden Erfindung werden im Sitzbereich des Sattels keinerlei Polster irgendwelcher Art angebracht. Diese sind einerseits wegen des speziell konzipierten Sitzbereiches des Sattels nicht notwendig und würden andererseits ein Trocknen des abgesonderten Schweisses verhindern oder zumindest stark vermindern.

Von wesentlicher Bedeutung gemäss vorliegender Erfindung ist nicht nur, dass die Luft unterhalb des Velosattels frei zirkulieren kann, sondern die Feuchtigkeit ungehindert nach unten durchtreten und verdunsten kann. Bei der Ausbildung von Polstern, Luftkissen und/oder nicht, bzw. zu wenig feuchtigkeitsdurchlässigen Sattel-Überzügen kann die Feuchtigkeit nicht nach unten durchtreten.

Die Tragbänder aus reissfestem Material können im wesentlichen wie folgt zum Einsatz gelangen:

– Zwei separate Bänder, welche an der vorderen und an der hinteren Konturschale befestigt werden. Die Tragbänder werden so befestigt, dass sie beidends stirnseitig zusammenstossen oder sogar überlappen.

– Ein etwa doppelt so langes Band wird im mittleren Bereich um die vordere oder um die hintere Konturschale geschlungen und auf der anderen Konturschale, diese ebenfalls umschlingend, auf Stoss oder Überlappung befestigt.

– Ein endloses, zusammengenähtes oder zusammengeklebtes Band einer vorausbestimmten Länge wird um die vordere und die hintere Konturschale geschlungen und mit diesen verbunden.

Die Tragbänder können im Sattelüberzug integriert, z.B. eingewoben, sein.

Die feste Verbindung der Tragbänder mit den Konturschalen erfolgt vorzugsweise durch Verkleben, Verschweissen, Verschrauben und/oder Vernieten. Die Bänder können stirnseitig so verschnitten sein, dass sie auf Stoss oder überlappt aufeinanderpassen. Die Bänder können jedoch im Verbindungsbereich auch durch Falten in die richtige Form gebracht werden.

Damit nicht nur das freie Dreieck zwischen den Tragbändern die Feuchtigkeit durchlassen kann, sind diese Tragbänder bevorzugt feuchtigkeitsdurchlässig ausgebildet und bestehen aus einem keine oder wenig Feuchte aufnehmenden Material. Dazu besonders geeignet sind Kunstfasern, insbesondere aus Polyesterfasern. Diese Fasern haben den Vorteil, dass sie die auf der Sattelunterseite verdunstende Feuchtigkeit sofort nachziehen und so dank des Kapillareffekts wesentlich zum erwünschten Verdunsten des Schweisses beitragen. Die beispielsweise 3-5 cm breiten Tragbänder haben in der Regel die grössere Fläche als das dazwischenliegende freie Dreieck.

Die Tragbänder können beispielsweise aus dem gleichen Material wie die Bänder von alpinen Anseilgurten bestehen, die eine sehr hohe Reissfestigkeit, aber dennoch eine gewisse Elastizität haben.

Wegen des breiter ausgebildeten weiblichen Beckens sind Damensättel etwas breiter ausgebildet als Herrensättel. Das Sitzbein soll in jedem Fall optimal aufliegen.

Die individuell oder gemeinsam spannbaren Tragbänder erfüllen ohne jegliche weiteren Vorkehrungen rein funktionell alle Voraussetzungen. Wie bereits erwähnt wird jedoch bevorzugt ein Überzug angeordnet, der leicht aufgebracht und entfernt werden kann und je nach Geschlecht und Alter, insbesondere aber persönlichem Geschmack, gewählt und auch ausgewechselt werden kann. Ein Überzug kann ohne weiteres auf die Kleidung des Velofahrers abgestimmt sein. Grundsätzlich werden zwei Typen von Überzügen verwendet:

– Ein billiger Überzug, der ein umlaufendes Elastikband hat und einfach über den Velosattel gestülpt wird. In diesem Fall weist der Sattel einen mit den beiden Konturschalen vorzugsweise einstückig ausgebildeten, formgebenden Konturrahmen auf.

– Ein anderer Typ von Überzug weist einen mindestens teilweise umlaufenden Konturrahmen aus flexiblem Kunststoff auf, welcher beispielsweise aus Polyurethan besteht. In diesem Fall ist der Überzug selbst formgebend. Ein die beiden Konturschalen verbindender Konturrahmen ist in diesem Fall nicht ausgebildet.

Im Sattelüberzug können Tragbänder integriert sein.

Der erfindungsgemässe Velosattel ist in hoher Qualität und mit besten Fahreigenschaften zu einem verhältnismässig günstigen Preis herstellbar, der bisher nur qualitativ ungenügenden Billigsätteln vorbehalten blieb, hergestellt werden. Er ist zur Neuausrüstung von Fahrrädern ebenso geeignet, wie zur Umrüstung von bereits in Betrieb stehenden Fahrrädern. Die Umrüstung kann durch einfaches Auswechseln des Sattels erfolgen.

Die Erfindung wird anhand der in der Zeichnung dargestellten Ausführungsbeispielen, welche auch Gegenstand von abhängigen Ansprüchen sind, näher erläutert. Es zeigen schematisch:

– Fig. 1 eine Ansicht eines Velosattels von unten,
– Fig. 2 eine Seitenansicht des Velosattels gemäss Fig. 1,
– Fig.3 eine teilweise aufgeschnittene Seitenansicht eines Velosattels mit Überzug,
– Fig.4 einen querschnitt durch den Überzug des Velosattels gemäss der Linie IV-IV,
– Fig.5 eine Ansicht eines Konturrahmens eines Überzugs mit einer Platte, von unten, und
– Fig. 6 eine Teilansicht einer Variante eines Überzugs für einen Velosattel.

Der Tragrahmen 10 eines Velosattels 12 besteht aus einem an sich bekannten, spiegelbildlich dreidimensional gebogenen Stab aus Stahl, Aluminium oder Kunststoff. Einends verläuft der Tragrahmen 10, etwa C-förmig gebogen, durch eine hintere Konturschale 14, wenigstens teilweise in einen Polyester eingegossen. Nach einer Variante wird nicht ein Stab durch die hintere Konturschale 14 geführt, sondern zwei entsprechend spiegelbildlich dreidimensional gebogene Stäbe des Tragrahmens 10 in ihr verankert. Der Tragrahmen 10 kann mit wenigstens einer nicht gezeichneten Strebe verstärkt sein.

In Richtung einer vorderen Konturschale 16 verlaufen die beiden Schenkel bzw. Stäbe des Tragrahmens 10 vorerst nach einer Abwinklung parallel, dann konvergieren sie, nach einer weiteren Abwinklung. Im Bereich des vorderen, stirnseitigen Endes verlaufen beide Schenkel bzw. Stäbe des Tragrahmens 10 wiederum parallel. Diese Endschenkel sind in zwei Bohrungen 18 der vorderen Konturschale 16 geführt, wo sie in Längsrichtung verschiebbar sind. Die Druckverteilung auf die vordere Konturschale 16 kann mit einem nicht gezeichneten Plättchen, das bei den Eintrittsöffnungen der Bohrungen 18 aufliegt, verbessert werden.

Hinter der vorderen Konturschale 16 ist ein Spannprofil 20, im vorliegenden Fall ein Spannplättchen, bis zum divergierenden Abbiegen der stirnseitig offenen parallelen Schenkel bzw. Stäbe des Tragrahmens 10. Das Spannprofil 20 hat in der Mitte eine Gewindebohrung, welche von einer Spannschraube 22 durchgriffen ist. In für den Fachmann leicht ersichtlicher Weise kann die Spannschraube 22 auch so ausgebildet sein, dass sie von vorne, durch eine Oeffnung in der vorderen Konturschale 16, betätigbar ist.

Durch Anziehen der Spannschraube 22 können Tragbänder 24, welche lediglich angedeutet sind, nach individuellen Bedürfnissen des Velofahrers gespannt oder durch Zurückdrehen der Schraube 22 gelockert werden. Die beiden Stirnseiten der Bänder 24 sind im vorliegenden Fall so zugeschnitten, dass sie auf Stoss aneinandergelegt und unter Ausbildung je einer Falte mit der vorderen Konturschale verklebt werden können. Zur weiteren Verstärkung der Verbindung der Tragbänder 24 mit der vorderen Konturschale sind die zugeschnittenen Stirnseiten mit einer Naht 26 verbunden. Die Verbindung der Tragbänder 24 mit der vorderen Konturschale 16 wird gesichert, indem mechanische Befestigungsmittel 28, beispielsweise Nieten oder Schrauben, oberflächenbündig oder leicht versenkt montiert werden.

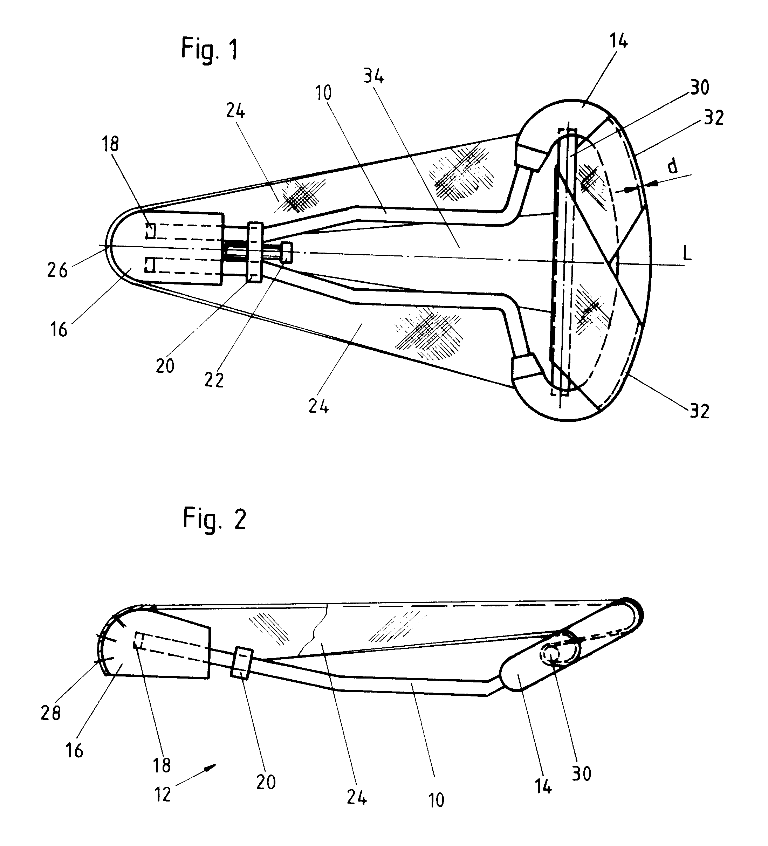

Durch die in den Fig. 1, 2 gezeigte Verbindung der Tragbänder mit der vorderen Konturschale 16 wird ein Umschlingungseffekt erzielt, indem der grösste Teil der Kraft nicht durch die eigentliche Verklebung oder mechanischen Befestigungsmittel abgenommen werden muss.

In der hinteren Konturschale 14 ist, in Abstand vom quer zur Längsrichtung L verlaufenden Teil, beidseits ein Quersteg 30 eingegossen. Weiter weist die Aussenseite der hinteren Konturschale 14 beidseits eine der Breite und Dicke d der Tragbänder 24 entsprechende nutförmige Aussparung 32 auf.

Die im Hinterteil einstückig ausgebildeten Tragbänder 24 werden von vorn in eine nutförmige Aussparung gelegt, um den Quersteg 30 geschlungen, in die andere nutförmige Aussparung 32 gelegt und wieder nach vorne geführt. Selbstverständlich erfolgt dies in der Praxis vor dem Verkleben der Tragbänder 24 mit der vorderen Konturschale 16.

Die Tragbänder 24 bilden einen im wesentlichen dreieckförmigen Zwischenraum 34, welcher sich in Längsrichtung L von der Naht 26 bis zum Quersteg 30 erstreckt.

Wenn kein Überzug verwendet wird, liegt die Hose des Radfahrers direkt auf dem Zwischenraum 32 und wird durch die Luftzirkulation unter dem Velosattel 12 rasch getrocknet. Die Tragbänder 24 sind feuchtigkeitsdurchlässig und haben eine geringe Wasseraufnahmekapazität, sie tragen deshalb ebenfalls massgebend zum Trocknungseffekt bei.

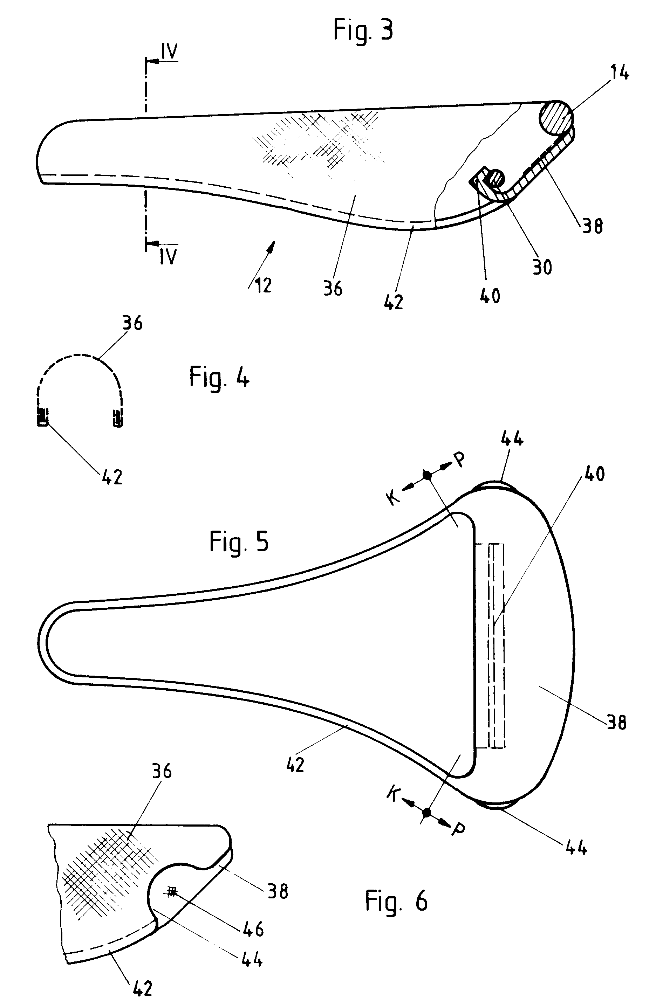

Der in Fig. 3 dargestellte Velosattel 12 ist mit einem Überzug 36 versehen, weshalb der eigentliche Sattel 12 nicht sichtbar ist.Auf der rechten Seite ist der Überzug teilweise aufgeschnitten. Es ist ersichtlich, dass der Überzug 36 teilweiwe auf die Innenseite einer Kunststoffplatte 38 geklebt oder mit dieser verschweisst ist.Die Kunststoffplatte weist am nicht mit dem Überzug 36 bekleideten Ende eine Hakenleiste 40 auf, welche ihrerseits am Quersteg 30 einhängt. Weiter kann die Kunststoffplatte 38 auf der Aussenseite zu Markierungs- und/oder Werbezeichen bedruckt oder sonstwie beschriftet werden.

Wie mit einer gestrichelten Linie angedeutet, hat der Überzug 36 einen umlaufenden Konturrahmen 42, welcher mit der Platte 38 einstückig ausgebildet ist und vorzugsweise ebenfalls aus einem flexiblen Kunststoff besteht. Im Bereich des Konturrahmens 42 ist der Überzug 36 gemäss Fig. 4 um den Konturrahmen 42 gelegt und auf der Innenseite verklebt oder verschweisst.

Fig. 5 zeigt eine Kunststoffplatte 38 mit einem einstückig ausgebildeten, flexiblen Konturrahmen 42 von unten. Die Hakenleiste 40 dient dem Festhaken am Quersteg 30 (Fig. 3). In den äussersten Bereichen der Kunststoffplatte 38 sind ohrförmige Lappen 44 angeformt, welche in Fig. 6 näher gezeigt werden.

Im umlaufenden Bereich K des flexiblen Konturrahmens ist der Überzug 36 (Fig. 3, 4) aussen, im Bereich P der Kunststoffplatte 38 innen verklebt oder verschweisst.

Fig. 6 zeigt näher, wie der Überzug 36 innenseitig auf die Kunststoffplatte 38 geklebt und hinter ohrförmigen, abstehenden Lappen 44 dieser Kunststoffplatte 38 durch und dann auf die vordere Seite des angedeuteten Konturrahmens 42 geführt ist. Dieser Lappen 44 bildet, wie in Fig. 5 ersichtlich, den äussersten Teil der hinteren Konturschale. So kann ein Velo überall angestellt werden, ohne dass der Überzug 36 beschädigt wird. Eine kleine Abreibfläche 46 stört nicht weiter, weil der Überzug 36 hinter dem Lappen 44 geschützt ist.

## Patentansprüche

1. Velosattel aus einem Tragrahmen (10) und einem Sitzteil mit längslaufenden, über den Tragrahmen (10) in Abstand gehaltenen, spannbaren Tragbändern (24) aus einem reissfesten Material,
   dadurch gekennzeichnet, dass
   sich zwei Tragbänder (24) im wesentlichen V-förmig von einer vorderen Konturschale (16) zu einer ebenfalls vom Tragrahmen (10) abgestützten, anatomisch breiter geformten hinteren Konturschale (14) erstrecken, welche Tragbänder (24) die Konturschalen (14, 16) zur Kraftaufnahme umschlingen und mit diesen verbunden sind, und der im wesentlichen dreieckförmige Zwischenraum (34) der Tragbänder (24) auf der unteren Seite freibleibend der Luftzirkulation unter dem Sattel zugänglich ist und auf der oberen Seite ebenfalls freibleibt oder höchstens mit einem feuchtigkeitsdurchlässigen Überzug (36) bedeckt ist.

2. Velosattel nach Anspruch 1, dadurch gekennzeichnet, dass Tragbänder (24) durch Verkleben, Verschweissen, Verschrauben und/oder Vernieten fest mit den Konturschalen (14, 16) verbunden sind, wobei die Tragbänder (24) im Verbindungsbereich vorzugsweise gefaltet und/oder zugeschnitten sind.

3. Velosattel nach Anspruch 2, dadurch gekennzeichnet, dass hinten verschnittene Tragbänder (24) auf einer angeformten Platte der hinteren Konturschale (14) befestigt sind.

4. Velosattel nach Anspruch 1, dadurch gekennzeichnet, dass die hintere Konturschale (14) einen im Querschnitt wenigstens nach vorne abgerundeten Quersteg (30) aufweist, welcher in Abstand vom zur Längsrichtung (L) querlaufenden Teil der hinteren Konturschale (14) befestigt ist.

5. Velosattel nach Anspruch 4, dadurch gekennzeichnet, dass die Tragbänder (24) mit der vorderen Konturschale (16), gefaltet und/oder verschnitten, fest verbunden sind, in der hinteren Konturschale (14) um den Quersteg (30) geschlungen und in äusseren, nutförmigen Aussparungen (32) liegend um die Schale geführt sind, wobei die Tiefe der nutförmigen Aussparungen (32) vorzugsweise der Banddicke (d) entspricht.

6. Velosattel nach einem der Ansprüche 1-5, dadurch gekennzeichnet, dass die Tragbänder (24) feuchtigkeitsdurchlässig sind und aus einem keine oder wenig Feuchte aufnehmenden Material bestehen, vorzugsweise aus Kunststofffasern, insbesondere aus Polyesterfasern.

7. Velosattel nach einem der Ansprüche 1-6, dadurch gekennzeichnet, dass die vordere Konturschale (16) verschiebbar auf dem Tragrahmen (10) angeordnet ist, vorzugsweise durch eine Spannschraube (22), welche ein benachbart der vorderen Konturschale (16) angeordnetes Verbindungsprofil (20) des Tragrahmens (10) durchgreift.

8. Velosattel nach einem der Ansprüche 1-7, dadurch gekennzeichnet, dass die Konturschalen (14, 16) und Tragbänder (24) mit einem feuchtigkeitsdurchlässigen, elastischen Überzug (36) bedeckt sind, welcher vorzugsweise aus einem feinen Gewebe, Gestrick oder Vlies besteht.

9. Velosattel nach Anspruch 8, dadurch gekennzeichnet, dass die Konturschalen (14, 16) zum Anbringen des Überzugs (36) mit einem Konturrahmen aus Kunststoff, vorzugsweise aus einem Polyester, verbunden oder einstückig mit diesem ausgebildet sind.

10. Velosattel nach Anspruch 8 oder 9, dadurch gekennzeichnet,dass der Überzug (36) eine hintere Kunststoffplatte (38) mit Mitteln (40) zum Einhängen am Quersteg (30) und vorzugsweise in den Aussenbereichen der hinteren Konturschale (14) mit ausgeformten ohrförmigen Lappen (44) und ausserhalb des Bereichs der Kunststoffplatte (38) einen an diese angeformten, flexiblen umlaufenden Konturrahmen (42) aus Kunststoff aufweist, wobei der Überzug im Bereich der Kunststoffplatte (38) auf der Innenseite und im Bereich des Konturrahmens (42) auf der Aussenseite aufgeklebt oder verschweisst ist.

Fig. 1

Fig. 2

Fig. 3

Fig. 4

Fig. 5

Fig. 6

EP 0 508 957 A1

<table>
<tr><td colspan="2">**Europäisches Patentamt**</td><td>**EUROPÄISCHER RECHERCHENBERICHT**</td><td>Nummer der Anmeldung<br><br>EP 92 81 0260</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 154 118 (TOUR MECHANICA)<br>* Seite 7, Zeile 9 - Zeile 20; Abbildungen 1,4-6 * | 1,2 | B62J1/02<br>B62J1/20 |
| A | --- | 3,4 | |
| A | GB-A-270 991 (H.NELSON)<br>* Seite 2, Zeile 3 - Zeile 12; Abbildungen 1,7 *<br>--- | 1,2 | |
| A | FR-E-36 158 (H.TROUCHE)<br>* Seite 1, Zeile 43 - Seite 2, Zeile 7; Abbildungen 3,4 *<br>--- | 1,4 | |
| A | US-A-2 395 346 (F.SCHWINN)<br>* Seite 2, Spalte 2, Zeile 51 - Seite 4, Spalte 1, Zeile 14; Abbildungen 1,2,5-9 *<br>--- | 1,7 | |
| A | FR-A-959 512 (A.MOURIER)<br>* Seite 1, Zeile 38 - Zeile 40; Abbildungen 1-5 *<br>--- | 1,8 | |
| A | BE-A-904 652 (C.DE KEYN)<br>* das ganze Dokument *<br>--- | 1,6,8 | **RECHERCHIERTE SACHGEBIETE (Int. Cl.5)** |
| A | US-A-3 131 969 (H.KALTER)<br>* das ganze Dokument *<br>----- | 9 | B62J |

Der vorliegende Recherchenbericht wurde für alle Patentansprüche erstellt

| Recherchenort | Abschlußdatum der Recherche | Prüfer |
|---|---|---|
| DEN HAAG | 22 JULI 1992 | CZAJKOWSKI A.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)

8